(19) Europäisches Patentamt
European Patent Office
Office européen des brevets

(11) Publication number: 0 299 565 A2

# (12) EUROPEAN PATENT APPLICATION

(21) Application number: 88201393.1

(51) Int. Cl.4: C08F 299/02 , G02B 1/04

(22) Date of filing: 04.07.88

(30) Priority: 09.07.87 NL 8701618

(43) Date of publication of application: 18.01.89 Bulletin 89/03

(84) Designated Contracting States: AT BE CH DE ES FR GB GR IT LI LU NL SE

(71) Applicant: AKZO N.V.
Velperweg 76
NL-6824 BM Arnhem(NL)

(72) Inventor: Schutyser, Jan André Jozef
Beverodelaan 32
NL-6952 JJ Dieren(NL)
Inventor: Olden, David van
Abraham Kuyperstraat 44
NL-6904 BJ Zevenaar(NL)

(74) Representative: Sieders, René et al
AKZO N.V. Patent Department (Dept. CO)
P.O. Box 9300
NL-6800 SB Arnhem(NL)

## (54) Optical products made from a thermosetting copolymer having an index of refraction nD20 - 1,52.

(57) Use of a monomeric mixture for preparing a thermosetting copolymer in the form of optical products having an index of refraction $n_D^{20}$ of at least 1,52, obtained by polymerization of one or more components of a first monomer obtained by reacting the epoxy groups of an aromatic polyepoxide with a phthalic acid half ester of the formula

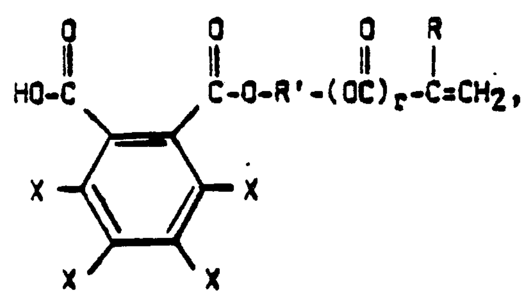

wherein X signifies a hydrogen, bromine and/or chlorine atom, R represents a hydrogen atom or methyl group, r = 1 or 0, with R′, when r = 0, representing a $-CH_2-$ group and, when r = 1, representing a substituted or unsubstituted alkylene group having 2-6 carbon atoms or the group $-CH_2-\underset{R}{C}HO-CH_2-\underset{R}{C}H-$,

wherein R has the above-indicated meaning and of which the hydroxyl groups may optionally be esterified with an aliphatic or aromatic acyl group, and one or more components of a second one or more vinyl or allyl groups-containing compound polymerizable under the influence of radicals.
Preferably the aromatic polyepoxide corresponds to the formula:

EP 0 299 565 A2

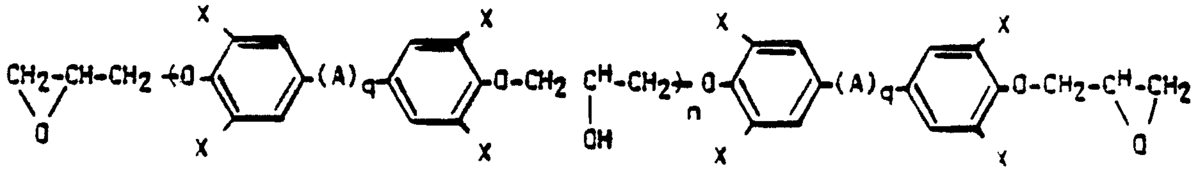

wherein q = 0 or 1, X has the meaning indicated above, n = 0-3, and wherein, when q = 1, A has the meaning of an optionally substituted alkylidene group having 1-3 carbon atoms, $SO_2$, S or O.
One of the preferred copolymerizable compounds corresponds to the formula

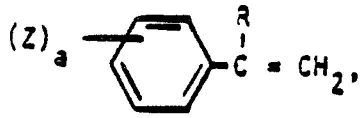

wherein R = H or $CH_3$, Z = H, Cl, Br, methyl, methoxy, phenyl or phenoxy, and a = 1 or 2.

## Optical products made from a thermosetting copolymer having an index of refraction $n_D^{20} \geq 1{,}52$

The invention relates to the use of a monomeric mixture for preparing a thermosetting copolymer in the form of optical products having an index of refraction $n_D^{20}$ of at least 1,52.

In the last few years much research has been directed to the preparation of clear organic polymers as a substitute for inorganic glass for the manufacture therefrom of optical products, especially lenses. Well-known organic polymers for the envisaged use are polystyrene, polymethyl methacrylate and, in particular, the well-known diethylene glycol diallyl carbonate marketed by AKZO and PPG under the trademarks Nouryset® 200 and CR-39®, respectively. So far, in most cases the latter polymer has been found to be most suited to actual practice in terms of properties such as index of refraction ($n_D^{20}$ = 1,50), Abbe value (= 58), specific gravity (1,31 g/cm$^3$), solvent resistance, scratch resistance, and impact strength. Consequently, the material is widely utilized for the manufacture of optical products such as corrective and plano lenses for spectacles, especially for protective goggles, lenses in optical instruments, guards, transparent covers for watches, measuring instruments, and the like.

Especially when ophthalmic glass is manufactured from organic material, exacting demands are made on weight, impact strength, index of refraction, and Abbe value. The low index of refraction of diethylene glycol diallyl carbonate compared with that of inorganic glass is experienced as a great drawback. As a result, a large number of replacement polymers with a higher refractive index have been proposed. However, the trouble with these polymers is that the Abbe value and/or one or more physical properties such as impact strength, resistance to heat and to solvents generally are not quite satisfactory. Although the refractive indices of organic glass made of polyvinyl naphthalene, polyvinyl carbazol, and polynaphthyl methacrylate are very high for organic polymers, their impact strength and weatherability are not at all satisfactory. Furthermore, these materials will after some time display a strong tendency to discolour.

The invention now makes it possible to provide a thermosetting copolymer having an index of refraction $n_D^{20}$ of at least 1,52, thus removing to a large extent the drawbacks attached to the known materials with a comparable index of refraction.

The invention consists in that the copolymer comprises one or more components of a first monomer obtained by reacting the epoxy groups of a chlorinated or unchlorinated or brominated or unbrominated aromatic polyepoxide with a phthalic acid half ester of the formula

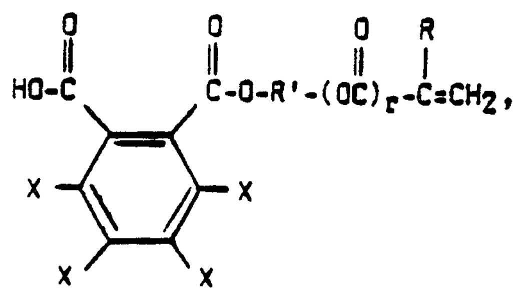

wherein

X signifies a hydrogen, bromine and/or chlorine atom, R represents a hydrogen atom or methyl group, r = 1 or 0, with R′, when r = 0, representing a $-CH_2$-group and, when r = 1, representing a substituted or unsubstituted alkylene group having 2-6 carbon atoms or the group $-CH_2-\underset{R}{\underset{|}{C}}HO-CH_2-\underset{R}{\underset{|}{C}}H-$,

wherein R has the above-indicated meaning and of which the hydroxyl groups may optionally be esterified with an aliphatic or aromatic acyl group, and one or more components of a second one or more vinyl or allyl groups-containing compound copolymerizable under the influence of radicals.

It should be noted that part of the monomeric mixtures used in preparing the optical products according to the invention had already been disclosed in U.S. Patent Specification 3 367 992 and British Patent Specifications 1 197 810 and 1 271 309.

The half esters described in the U.S. Specification correspond to the general formula

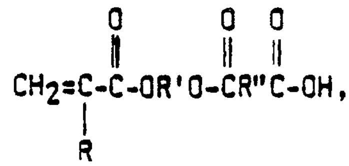

wherein R has the meaning of a hydrogen atom or methyl group, R′ signifies an organic group with 2-6 carbon atoms of which at least 2 form a chain between the adjacent oxygen atoms, and R″ represents a saturated aliphatic group, an unsaturated aliphatic group, the group > C = $\underset{X}{C}$ -,

wherein X stands for a halogen atom, or an aromatic group.

The polymers disclosed in the description and the examples have an index of refraction and other properties which do not render them particularly suitable to being manufactured into optical products. The same applies to the polymer compositions disclosed in said British Patent Specifications. According to the invention favourable results are obtained when use is made of a monomeric mixture comprising a chlorinated or unchlorinated or brominated or unbrominated aromatic polyepoxide corresponding to the formula

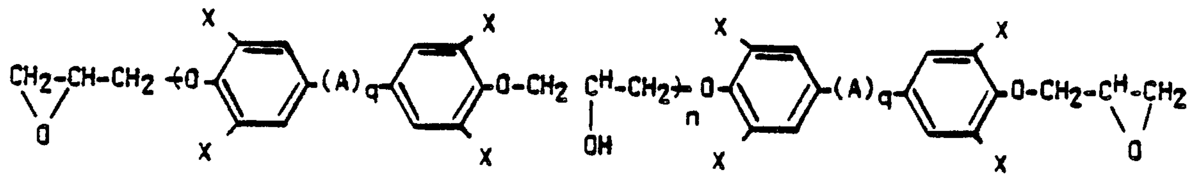

wherein q = 0 or 1, X has the above-indicated meaning, n = 0-3, and wherein, when q = 1, A has the meaning of an optionally substituted alkylidene group having 1-3 carbon atoms, $SO_2$, S or O. Preference is then given to a polyepoxide of the above-mentioned formula wherein n = 0, q = 1, and A stands for an isopropylidene group. Favourable results are also obtained when use is made of a monomeric mixture comprising a chlorinated or unchlorinated or brominated or unbrominated aromatic polyepoxide corresponding to the formula:

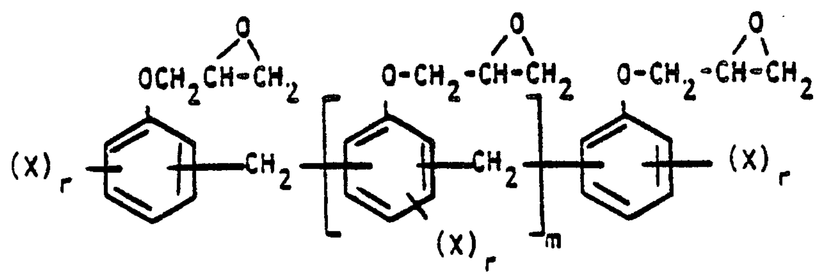

wherein r = 1, 2 or 3, X has the above-indicated meaning, and m = 0-3.

The conversion of the phthalic acid half ester with the aromatic epoxide is attended with the formation of free hydroxyl groups. As under some circumstances these may cause releasing problems due to adhesion to the mould, it is preferred according to the invention that the hydroxyl groups be esterified by conversion with an aromatic acyl chloride of the formula

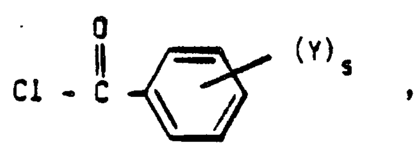

wherein s = 0 to 5 and Y has the meaning of a bromine atom or chlorine atom and/or a methyl group or methoxy group.

Favourable results may also be obtained when the hydroxyl groups are esterified by conversion with (meth)acryloyl chloride, (meth)allyloxycarbonyl chloride and/or cinnamoyl chloride. Also, the hydroxyl groups may be esterified by conversion with an alkanoyl chloride having 2-7 carbon atoms.

In addition to one or more components of one of the afore-mentioned monomers the monomeric mixture for preparing optical products according to the invention will always contain one or more components of a second one or more vinyl or allyl groups-containing compound copolymerizable under the influence of radicals.

As such may in principle be used all monomers which satisfy the above-mentioned criterion and, moreover, are capable of providing a preferably colourless and clear copolymer.

The monomers may be monofunctional, bifunctional or multifunctional. As examples of suitable monomers may be mentioned:

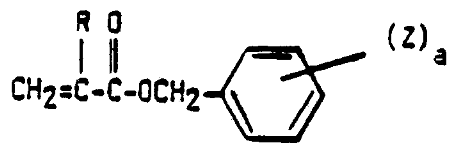

wherein R = H or $CH_3$, Z = H, Cl, Br, methyl, methoxy, phenyl or phenoxy, and a = 1 or 2;
alkyl methacrylate having 1 to 6 carbon atoms in the alkyl group or allyl (meth)acrylate;

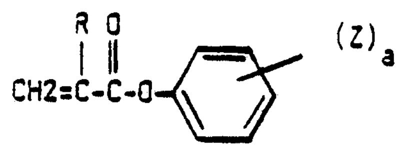

wherein R, Z, and a have the above-indicated meaning. However, preference is given to a copolymer in the preparation of which use has been made of a compound of the formula

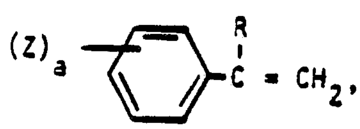

wherein R, Z, and a have the same meaning as given above. Especially when use is made of styrene as second monomer optical products having particularly favourable properties are obtained.

In the application of a bifunctional monomer use may with advantage be made of divinyl benzene. Other bifunctional and multifunctional compounds which may be used within the scope of the invention are the diallyl carbonate of mono-, di-, tri- and/or tetraethylene glycol and the (meth)acrylate esters of polyols such as 1,4-butanediol, ethylene glycol, diethylene glycol, triethylene glycol, pentaerythritol, trimethylol propane, and/or mono- or polysaccharide.

It has been found that, in general, optical products having satisfactory optical and other physical properties are obtained when the weight ratio of the first monomer to the second monomer is in the range of 25:75 to 75:25.

When the first monomer is used in an amount of less than 25% by weight, the index of refraction of the copolymer will often be lower than 1,52, and when the first monomer is used in an amount of more than 75% by weight, the viscosity of the resin mixture will become so high as to impede the filling of the mould.

In this process preference is given to a weight ratio in the range of 30:70 to 70:30, with optimum results being obtained in general using a weight ratio in the range of 40:60 to 60:40.

In preparing the first monomer the process may be followed which is disclosed in U.S. Patent Specification 3 367 992, with the proviso that when preparing the copolymer according to the invention strict care should be taken that the catalyst is removed from the reaction product by thorough washing, as else discolouration of the final copolymer may occur.

As a rule, the process is as follows. First, the half ester is prepared from an equimolar amount of phthalic anhydride and allyl alcohol or an ω-hydroxyalkyl (meth)acrylate such as 2-hydroxyethyl methacrylate at a temperature in the range of 20° to 150° C, preferably in the range of 80° to 115° C. Next, the half ester is converted with an equivalent amount of the bisepoxide in the presence of tetrabutyl

phosphonium bromide as catalyst at a temperature in the range of 20° to 120°C. On conclusion of the reaction the catalyst is removed by frequent washing with water, the resin is dissolved in dichloromethane, and the water is removed by azeotropic distillation. The free hydroxyl groups in the resin may be esterified with an acyl chloride in the presence of an acid binder. After the reaction product has been washed until it is halogen free and after drying, the resin monomer is in a suitable state for conversion into a copolymer according to the invention by radical polymerization with any one of the afore-mentioned vinyl monomers.

As a rule, the reaction is carried out in the presence of a radical initiator. In this process the reaction may be initiated by heating the reaction mixture or radiating it with ultraviolet light or subjecting it to ionizing radiation.

Examples of radical initiators which may optionally be used in the preparation of the copolymers according to the invention include benzoyl peroxide, p-chlorobenzoyl peroxide, 2,4-dichlorobenzoyl peroxide, decanoyl peroxide, lauroyl peroxide, and acetyl peroxide; percarbonates such as diisopropyl peroxydicarbonate, di-secondary butyl peroxydicarbonate, and di-2-ethylhexylperoxydicarbonate; alkyl peresters such as 2-butylperoxy-2-ethylhexanate and t-butyl peroxypivalate; and azo compounds such as azobisisobutyronitrile. The amount of initiator is dependent on the type of polymerization, the polymerization conditions, the monomers used, etc. Generally, an amount of 0,05 to 10% by weight and preferably 0,1 to 8% by weight, calculated on the total monomer weight, will suffice.

The polymerization reaction is preferably carried out in a mould. The quality of the optical polymers according to the invention is to a large extent influenced by the temperature, which depends on the types of monomer as well as on their relative weight ratio and the type of initiator. In general, it is preferred that the polymerization reaction be initiated at a relatively low temperature, the temperature be increased gradually, and that toward the end of the polymerization reaction the product be cured at elevated temperature. Preferred conditions generally allow the polymerization to be completed within 2 to 40 hours. As the need arises, the polymerization reaction may be carried out in the presence of several stabilizers and other additions, such as a mould release agent, UV absorbent, antioxidant, and the like. The cured polymer according to the invention is generally colourless transparent and displays a light transmittance of at least 80%. The copolymer has an index of refraction of at least 1,52 and polymers having a higher refractive index are easily realized by a correct selection of the second monomer.

When use is made of a cross-linked copolymer, it will be possible to further process the resulting optical lenses by machine.

The invention will now be further described in, but not limited by, the following examples.

On the copolymers of which the preparation is given in the examples below the following properties were measured:

- the index of refraction ($n_D^{20}$) and the Abbe value with the use of an Abbe refractometer;
- the glass transition temperature was determined by "Differential Thermal Analysis" (DTA) with the use of a Du Pont 900 Thermal Analyzer under nitrogen at a heating rate of 20°C/minute;
- the solvent resistance: the samples were immersed for 5 minutes at room temperature in each of the following 4 liquids: ethanol, acetone, 5% aqueous sodium hydroxide solution, and 5% aqueous hydrogen chloride solution. The samples which did not suffer any visible damage in the experiment were found to be solvent resistant;
- the Shore D hardness in accordance with DIN 53 505;
- the impact strength: determined by unnotched Charpy test in accordance with ISO 179-1982 on sawn plaques of 50 ± 1 mm long, 6 ± 0,2 mm wide, and 4 ± 0,2 mm thick. The samples which demonstrated an impact strength in this test of 13 to 16 kJ/$m^2$ were rated good.

## Example I

### A Preparation of a half ester of phthalic acid and 2-hydroxyethyl methacrylate

Into a 3-necked flask fitted with a stirrer, a reflux condenser, and a thermometer were introduced 148 g (1 mole) of phthalic anhydride, 130 g (1 mole) of 2-hydroxyethyl methacrylate, and 0,13 g of p-methoxyphenol. Use being made of an oil bath, the reaction mixture was slowly heated to a temperature of 115°C, after which it was kept at that temperature for 4½ hours. After cooling a transparent, viscous liquid was obtained with an acid content of 3,5 meq of carboxyl groups per gram of resin.

B Conversion of the half ester with the diglycidyl ether of 4,4′-isopropylidene diphenol (= Bisphenol A) having an epoxy equivalent weight (EEW) of 174

278 g (1 mole) of the half ester prepared under A, 174 g (0,5 moles) of the diglycidyl ether of 4,4′-isopropylidene diphenol (EEW = 174), and 1,63 g of tetrabutyl phosphonium bromide were fed into a 3-necked flask fitted with a stirrer, a reflux condenser and a thermometer, and heated to 115 °C using an oil bath. After 2,5 hours' stirring at 115 °C the reaction was concluded. The content of carboxyl groups per g of resin was less than 5% of the starting amount.

After cooling the resin to 60 °C 900 ml of dichloromethane were added with stirring and the resin was dissolved with stirring. The tetrabutyl phosphonium bromide was removed by repeated washing with water until the presence of bromide ions in the washing water could no longer be demonstrated with silver nitrate. Following separation of the last water layer, 45 mg of p-methoxyphenol were added to the resin solution in dichloromethane. Using azeotropic distillation the dichloromethane and the remaining water were removed from the resin solution under reduced pressure and using a rotating vacuum evaporator until, at a pressure of 0,1 mm Hg and a temperature of 100 °C, no longer any volatile components evolved. Obtained were 430 g of resin having a hydroxyl content and a vinyl content of 1,8 and 1,95 meq/g, respectively.

C Copolymerization of the resin prepared under B with styrene

To a mixture of 50 parts by weight of the resin prepared under B and 50 parts by weight of styrene (viscosity 40 cps, measured at 20 °C using the Brookfield Model LVT viscometer) were added as initiator 0,5 parts by weight of dibenzoyl peroxide. After filtration and removal of the air with a vacuum pump the mixture was divided between two types of moulds. One type of mould was made of two glass plates of 15x15 cm with in between a 4 mm thick sealing ring of softened PVC. The mould was placed between two clamps. The second type of mould was also of glass and suitable for manufacturing a lens with a diameter of 6,5 cm. In this latter case the sealing ring was of polyethylene. The polymerization was carried out in a hot air furnace, firstly for 22 hours at 65 °C, next for 170 minutes at 80 °C, and finally for 2 hours at 100 °C.

The properties of the polymer are given in Table 1.

Example II

The experiment of Example IB was repeated, except that immediately after the 2,5-hour reaction at 115 °C 326 g of the resulting adduct were diluted with dichloromethane until a solution of 25% by weight was obtained. To this solution were then added in a 3-necked flask fitted with a dropping funnel, a reflux condenser, and a stirrer 95,6 g (0,680 moles) of benzoyl chloride at 20 °C. Next, 356 ml of an aqueous 2N potassium hydroxide solution were added over a period of 2 hours, care being taken that the pH did not rise to above 9. During the acylation reaction the temperature was maintained at 20° to 21 °C. After the acylation the reaction mixture was transferred to a separatory funnel and the water layer was separated. The resin solution in dichloromethane was subsequently thoroughly washed with, successively, icewater, 5% by weight sodium bicarbonate solution (0 °C), 1N hydrochloric acid (0 °C), and icewater until the presence of bromide or chloride in the washing water could no longer be demonstrated with silver nitrate. To the separated dichloromethane layer were added 36 mg of p-methoxyphenol and the dichloromethane and water were removed by azeotropic distillation in a manner indicated in Example IB.

Obtained were 364 g of resin containing 0,11 meq hydroxyl groups and 2,08 meq vinyl groups.

For the preparation of a copolymer according to the invention 50 parts by weight of this resin were mixed with 50 parts by weight of styrene to form a mixture with a viscosity of 22 cps. After the addition of 0,5 parts by weight of dibenzoyl peroxide copolymer plates and lenses were made in a manner indicated in Example I. The properties of the resulting highly transparent and colourless products are given in Table 1.

Example III

In this example 60 parts by weight of the acylated resin from Example II were mixed with 40 parts by weight of styrene to form a mixture with a viscosity of 58 cps.

After the addition of 0,5 parts by weight of dibenzoyl peroxide highly transparent and colourless products were obtained of which the properties are summarized in Table 1.

Example IV

In a manner analogous to that given in Example III 70 parts by weight of the acylated resin of Example II were mixed with 30 parts by weight of styrene. To this mixture of a viscosity of 289 cps were added 0,5 parts by weight of dibenzoyl peroxide. Obtained were highly transparent and colourless products of which the properties are given in Table 1.

When over 75 parts by weight of resin and almost 25 parts by weight of styrene were used, a mixture was obtained with a viscosity of 927 cps, as a result of which the moulds could no longer be filled in a practically manageable way.

Example V

In a manner analogous to that given in Example III the parts by weight of the acylated resin from Example II indicated in Table 2 below were mixed with the parts by weight of styrene, benzyl methacrylate ($B_zMA$), and/or ethylene glycol dimethacrylate (EGDMA) also indicated in this Table.

Table 1

| Polymer in Example | $n_D^{20}$ | Abbe value | Shore D hardness | specific gravity g/cm³ | Tg (°C) | impact strength | solvent resistance |
|---|---|---|---|---|---|---|---|
| I | 1,582 | 31 | 86 | 1,14 | 109 | 0 | 0 |
| II | 1,584 | 32 | 86 | 1,16 | 100 | 0 | 0 |
| III | 1,582 | 33 | 85 | 1,18 | 94 | 0 | 0 |
| IV | 1,582 | 33 | 88 | 1,20 | 93 | 0 | 0 |
| V A | 1,580 | 32 | 87 | 1,19 | 96 | 0 | 0 |
| B | 1,580 | 33 | 87 | 1,22 | 88 | 0 | 0 |
| C | 1,578 | 33 | 87 | 1,19 | 95 | 0 | 0 |
| D | 1,550 | 39 | 85 | 1,22 | - | X | 0 |
| PMMA[a] | 1,491 | 57 | 86 | 1,19 | | 0 | X |
| Nouryset® 200[b] | 1,499 | 58 | 86 | 1,31 | | 0 | 0 |

a PMMA: polymethyl methacrylate
b Nouryset® 200: polyethylene glycol diallyl carbonate
0: sufficient
X: insufficient

Table 2

| Example V | parts by weight | | | | viscosity of mixture (cps) | parts by weight of initiator |
|---|---|---|---|---|---|---|
| | acrylated resin from Example III | styrene | EGDMA | $B_zMA$ | | |
| A | 60 | 36 | - | 4 | 75 | 0,5 (a) |
| B | 60 | 20 | - | 20 | 120 | 0,5 (a) |
| C | 60 | 40 | 10 | - | 45 | 0,5 (b) |
| D | 35 | 15 | 50 | - | 33 | 0,25 (b) |

(a) dibenzoyl peroxide; polymerization conditions: 22 hours at 65°C, 170 minutes at 80°C, and finally 120 minutes at 120°C
(b) bis(4-tertiary-butyl cyclohexyl) peroxydicarbonate; polymerization conditions: 16 hours at 45°C, 1 hour at 63°C, 40 minutes at 78°C, and 20 minutes at 100°C

The properties of the highly transparent and colourless products are given in Table 1.

Example VI

In a manner analogous to that described in Example IA a half ester was prepared from phthalic anhydride and 2-hydroxyethyl methacrylate. The carboxyl content was 3,39 meq/g. Of this half ester 214 g were mixed in a 3-necked flask with an equivalent amount of 239,2 g of the diglycidyl ether of 2,2-bis(4-hydroxy-3,5-dibromophenyl)propane (EEW = 330) and 1,63 g of tetrabutyl phosphonium bromide. The reaction was carried out at 115°C over a period of 135 minutes. After cooling down to 60°C the resulting resin (having 0,18 meq of carboxyl groups per g of resin) was diluted with dichloromethane until a solution of 25% by weight was obtained. To this solution were successively added 101,9 g (0,725 moles) of benzoyl chloride and 389 ml of 2N potassium hydroxide solution over a period of 2 hours. Next, the reaction mixture was treated in a manner analogous to that indicated in Example II. Thus a clear, pale-yellow resin was obtained with a hydroxyl content of 0,07 meq per g of resin.

60 parts by weight of this resin were mixed with 40 parts by weight of styrene and 0,6 parts by weight of bis(4-tert.-butyl cyclohexyl)peroxydicarbonate (composition A) and 60 parts by weight of the same resin were mixed with 40 parts by weight of styrene and 20 parts by weight of ethylene glycol dimethacrylate (EGDMA) and 0,6 parts by weight of the same initiator (composition B).

The physical properties of the resulting copolymers are given in Table 3 below.

Table 3

| Composition | viscosity monomer mixture | $n_D^{20}$ | Abbe value | Shore D hardness | specific gravity g/cm³ | Tg (°C) | impact strength | solvent resistance |
|---|---|---|---|---|---|---|---|---|
| A | 70 | 1,593 | 32 | 84 | 1,27 | 96 | 0 | 0 |
| B | 34 | 1,579 | 34 | 88 | 1,24 | 113 | X | 0 |

The polymerization conditions of the above compositions were as follows: 16 hours at 45°C, 1 hour at 63°C, 40 minutes at 78°C, and 20 minutes at 100°C.

Example VII

A Preparation of monoallyl phthalate

Into a 3-necked flask fitted with a stirrer, a reflux condenser, and a thermometer were introduced 148 g (1 mole) of phthalic anhydride and 290 g (5 moles) of freshly distilled allyl alcohol. The reaction mixture was heated with stirring under dry nitrogen to the boiling point of the allyl alcohol. After 135 minutes' boiling with refluxing the reaction was stopped and the contents of the flask were cooled to room temperature. Using a rotating vacuum evaporator the excess of allyl alcohol was then removed at reduced pressure. Finally, a small amount of low-boiling compounds was removed under high vacuum at a maximum temperature of 100°C. The half ester contained 4,6 meq of carboxyl groups per g, which corresponds to 95% of the theoretical amount.

B Conversion of the half ester with the diglycidyl ether of 4,4′-isopropylidene diphenol (= Bisphenol A) having an epoxy equivalent weight (EEW) of 174

Introduced into a 3-necked flask were 66,90 g (0,32 moles) of monoallyl phthalate, 53,62 g (0,15 moles) of the diglycidyl ether of 4,4′-isopropylidene diphenol (EEW = 174) and 0,43 g of tetrabutyl phosphonium bromide. The reaction mixture was stirred for 2½ hours under nitrogen at 115 °C. After cooling a viscous, clear resin was obtained having 0,15 meq of carboxyl groups per g, which points to a virtually complete conversion.

C Acylation of the hydroxyl groups of the resin obtained under B

119 g of the hydroxyl-containing resin of which the preparation is given under B were dissolved at 45 °C in dichloromethane until a 27% by weight solution was obtained. To this solution were added 47 g of benzoyl chloride and subsequently, over a period of 2 hours, 180 ml of a 2N aqueous potassium hydroxide solution. The reaction was carried out at a temperature of 20 ° to 21 °C, care being taken that the pH did not rise to above 9. On conclusion of the reaction the water layer and dichloromethane layer were separated. The latter layer was then thoroughly washed with, successively, icewater, an ice-cold 5% by weight aqueous $NaHCO_3$ solution, ice-cold 1N hydrochloric acid, and icewater until the wash layer was chloride and bromide free.

The dichloromethane and the remaining water were next removed from the organic layer by azeotropic distillation. There was left a viscous, clear resin which was well-soluble in, say, diallyl phthalate, diallyl isophthalate, diethylene glycol diallyl carbonate, and benzyl methacrylate. The yield was 127 g. The resin contained 1,9 meq of allyl groups per g of resin.

D Copolymerization of the resin prepared under C with diethylene glycol diallyl carbonate

To a mixture of 50 parts by weight of the resin prepared under C and 50 parts by weight of diethylene glycol diallyl carbonate (viscosity 500 cps) were added 3,3 parts by weight of diisopropyl peroxydicarbonate. Following filtration and removal of the air the mixture was polymerized in moulds. The polymerization was carried out in a hot air furnace, firstly for 16 hours at 45 °C, next for 1 hour at 63 °C, 40 minutes at 78 °C, and finally for 20 minutes at 100 °C. The resulting plates and lenses were colourless and possessed a high transparency in the visible range. The properties are given in the tabel below.

Table 4

$n_D^{20}$ : 1,540
Abbe value : 40
(Shore D) hardness : 80
specific gravity (g/cm$^3$) : 1,26
Tg (°C) : 43
solvent resistance : 0
impact strength : 0 (comparable with the diethylene glycol diallyl carbonate homopolymer)

## Claims

1. Use of a monomeric mixture for preparing a thermosetting copolymer in the form of optical products having an index of refraction $n_D^{20}$ of at least 1,52, characterized in that the copolymer is obtained by polymerization of one or more components of a first monomer obtained by reacting the epoxy groups of a chlorinated or unchlorinated or brominated or unbrominated aromatic polyepoxide with a phthalic acid half ester of the formula

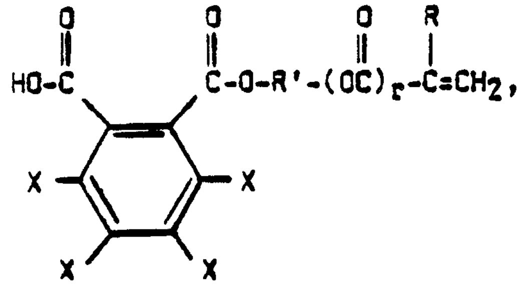

wherein X signifies a hydrogen, bromine and/or chlorine atom, R represents a hydrogen atom or methyl group, r = 1 or 0, with R′, when r = 0, representing a $-CH_2-$ group and, when r = 1, representing a substituted or unsubstituted alkylene group having 2-6 carbon atoms or the group $-CH_2-\underset{R}{C}HO-CH_2-\underset{R}{C}H-$, wherein R has the above-indicated meaning and of which the hydroxyl groups may optionally be esterified with an aliphatic or aromatic acyl group, and one or more components of a second one or more vinyl or allyl groups-containing compound polymerizable under the influence of radicals.

2. Use of a monomeric mixture according to claim 1, characterized in that the chlorinated or unchlorinated or brominated or unbrominated aromatic polyepoxide corresponds to the formula:

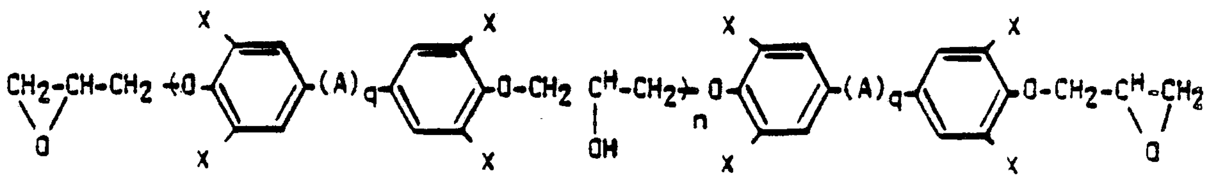

wherein q = 0 or 1, X has the meaning indicated in claim 1, n = 0-3, and wherein, when q = 1, A has the meaning of an optionally substituted alkylidene group having 1-3 carbon atoms, $SO_2$, S or O.

3. Use of a monomeric mixture according to claim 2, characterized in that n = 0, q = 1, and A stands for an isopropylidene group.

4. Use of a monomeric mixture according to claim 1, characterized in that the chlorinated or unchlorinated or brominated or unbrominated aromatic polyepoxide corresponds to the formula:

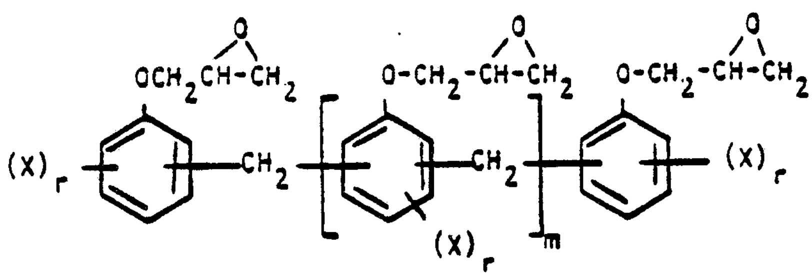

wherein r = 1, 2 or 3, X has the meaning indicated in claim 1, and m = 0-3.

5. Use of a monomeric mixture according to claim 1, characterized in that the hydroxyl groups are esterified by conversion with an aromatic acyl chloride of the formula

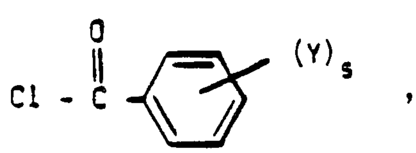

wherein s = 0 to 5 and Y has the meaning of a bromine atom or chlorine atom and/or a methyl group or methoxy group.

6. Use of a monomeric mixture according to claim 1, characterized in that the hydroxyl groups are esterified by conversion with (meth)acryloyl chloride, (meth)allyloxycarbonyl chloride, and/or cinnamoyl chloride.

7. Use of a monomeric mixture according to claim 1, characterized in that the hydroxyl groups are esterified by conversion with an alkanoyl chloride having 2-7 carbon atoms.

8. Use of a monomeric mixture according to claim 1, characterized in that the compound copolymerizable under the influence of radicals corresponds to the formula

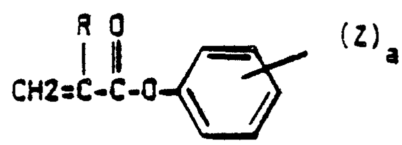

wherein R = H or $CH_3$, Z = H, Cl, Br, methyl, methoxy, phenyl or phenoxy, and a = 1 or 2.

9. Use of a monomeric mixture according to claim 1, characterized in that the compound copolymerizable under the influence of radicals corresponds to the formula

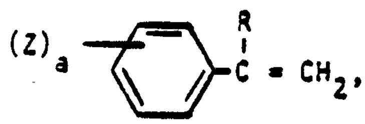

wherein R, Z, and a have the same meaning as given in claim 8.

10. Use of a monomeric mixture according to claim 1, characterized in that the compound copolymerizable under the influence of radicals corresponds to the formula

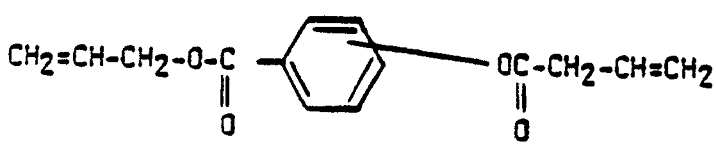

11. Use of a monomeric mixture according to claim 1, characterized in that the compound copolymerizable under the influence of radicals corresponds to the formula

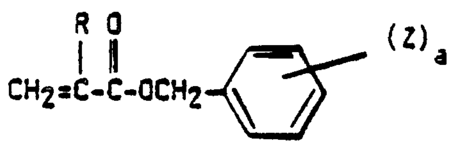

wherein R, Z, and a have the same meaning as given in claim 8.

12. Use of a monomeric mixture according to claim 1, characterized in that the compound copolymerizable under the influence of radicals is alkyl (meth)acrylate having 1 to 6 carbon atoms in the alkyl group.

13. Use of a monomeric mixture according to claim 1, characterized in that the compound copolymerizable under the influence of radicals is allyl (meth)acrylate.

14. Use of a monomeric mixture according to claim 1, characterized in that the compound copolymerizable under the influence of radicals is the diallyl carbonate of mono-, di-, tri-, and/or tetraethylene glycol.

15. Use of a monomeric mixture according to claim 1, characterized in that the compound copolymerizable under the influence of radicals is a (meth)acrylate ester of polyols such as 1,4-butanediol, ethylene glycol, diethylene glycol, triethylene glycol, pentaerythritol, trimethylol propane, and/or mono- or polysaccharide.

16. Use of a monomeric mixture according to claim 1, characterized in that the compound copolymerizable under the influence of radicals is divinyl benzene.

17. Use of a monomeric mixture according to claim 1, characterized in that the weight ratio in the copolymer of the monomer obtained by reaction with epoxy groups to the vinyl or allyl groups-containing compound copolymerizable with it is in the range of 25:75 to 75:25.